# EUROPÄISCHE PATENTSCHRIFT

(11) **EP 2 165 935 B1**
(45) Veröffentlichungstag und Bekanntmachung des Hinweises auf die Patenterteilung: **15.08.2012**
(21) Anmeldenummer: 09170249.8
(22) Anmeldetag: 15.09.2009
(51) Int. Cl.: B65B 57/00, G01M 3/32, B65B 7/28, B29C 49/78

(54) **Verschlusspuffer mit Inspektionseinheit**
Clasp buffer with inspection unit
Tampon de fermeture doté d'une unité d'inspection

(30) Priorität: 16.09.2008 DE 102008047286
(43) Veröffentlichungstag der Anmeldung: 24.03.2010
(73) Patentinhaber: Krones AG, 93073 Neutraubling (DE)
(72) Erfinder: Hahn, Wolfgang, 93073 Neutraubling (DE)
(74) Vertreter: Bittner, Bernhard

(56) Entgegenhaltungen:
- DE-A1- 19 928 325
- DE-U1- 20 308 513
- US-A- 5 668 307

## Beschreibung

Die vorliegende Erfindung bezieht sich auf eine Vorrichtung zum Herstellen von Behältnissen. So eine Vorrichtung und ein Verfahren sind z.B. aus DE 199 28 325 A1 bekannt. Aus dem Stand der Technik ist es seit langem bekannt, Behältnisse zunächst herzustellen, anschließend zu befüllen und schließlich mit Behältnisverschlüssen zu verschließen. Dabei ist es ebenfalls bekannt, diese Behältnisverschlüsse einem Verschließer zuzuführen, der anschließend die ebenfalls an dem Verschließer ankommenden Behältnisse mit diesen Verschlüssen verschließt. Diese Systeme arbeiten zufrieden stellend und erlauben auch üblicherweise einen hohen Durchsatz. Teilweise sind jedoch diejenigen Fälle problematisch, in denen fehlerhafte Verschlüsse auftreten oder auch ein Ausfall des Verschlussstroms auftritt.

Der vorliegenden Erfindung liegt daher die Aufgabe zugrunde, eine Vorrichtung und ein Verfahren zum Herstellen von Behältnissen zu schaffen, welche auch bei Auftreten von Fehlern flexible Reaktionen erlauben. Damit soll auch die Zuverlässigkeit einer derartigen Vorrichtung zum Herstellen von Behältnissen erhöht werden. Diese Aufgaben werden durch die Gegenstände der unabhängigen Vorrichtungs- und Verfahrensansprüche erreicht. Vorteilhafte Ausführungsformen und Weiterbildungen sind Gegenstand der Unteransprüche.

Eine erfindungsgemäße Vorrichtung zum Herstellen von Behältnissen weist eine Transporteinrichtung auf, welche die Behältnisse entlang eines vorgegebenen Transportpfads transportiert. Weiterhin ist wenigstens eine Behandlungseinrichtung vorgesehen, welche die Behältnisse in einer vorgegebenen Weise behandelt sowie eine Verschließeinrichtung, welche in einer Transportrichtung der Behältnisse nach der Behandlungseinrichtung angeordnet ist und welche die Behältnisse mit Verschlüssen versieht. Weiterhin ist auch eine Zuführeinrichtung vorgesehen, welche die Verschlüsse der Verschließeinrichtung zuführt.

Erfindungsgemäß ist in einer Transportrichtung der Verschlüsse vor der Zuführeinheit eine Inspektionseinrichtung vorgesehen, welche die Verschlüsse inspiziert und welche wenigstens ein Signal ausgibt, welches für einen physikalischen Zustand der Verschlüsse charakteristisch ist. Unter einer Herstellung der Behältnisse wird dabei insbesondere die Herstellung von befüllten Behältnissen verstanden, also neben der Herstellung des Behältnisses selbst auch dessen Befüllung und gegebenenfalls weitere Arbeitsschritte, wie das Sterilisieren der Behältnisse.

Damit wird erfindungsgemäß vorgeschlagen, eine derartige Inspektionseinrichtung nicht direkt in der Verschließeinrichtung vorzusehen, sondern vor derselben bzw. sogar vor einer Zuführeinrichtung für die Verschlüsse. Bei dieser Zuführeinrichtung kann es sich beispielsweise um einen Kanal oder um eine Strecke handeln, entlang derer die Verschlüsse geführt werden. Durch die Anordnung dieser Inspektionseinrichtung vor dieser Zuführeinrichtung ist ein flexibles Reagieren auf Fehlerzustände möglich, da ein fehlerhafter Verschluss nicht unmittelbar zu einem ebenso fehlerhaften Verschließvorgang führt. Vorzugsweise dient die Zuführeinrichtung auch als Transporteinrichtung für die Verschlüsse.

Vorzugsweise ist die Behandlungseinrichtung eine Umformungseinheit oder weist eine solche auf, welche Vorformlinge zu Behältnissen umformt. Damit eignet sich die Erfindung insbesondere für Anlagen, welche Umformungseinheiten wie Streckblasmaschinen aufweisen, welche Kunststoffvorformlinge zu Kunststoffbehältnissen umformen. Neben dieser Umformungseinheit ist dabei nach derselben bevorzugt eine Befüllungseinrichtung vorgesehen, welche die Behältnisse befüllt, damit diese anschließend mit den Verschlüssen verschlossen werden können. Die vorliegende Erfindung ist jedoch auch auf die Herstellung anderer Behältnisse, wie beispielsweise von Glasbehältnissen, geeignet.

Vorzugsweise befinden sich die Behandlungseinrichtung und gegebenenfalls auch weitere Behandlungseinrichtungen innerhalb eines Sterilraums.

Bei der erfindungsgemäßen Ausführungsform ist in der Transportrichtung der Behältnisse vor der Behandlungseinrichtung eine Sperreinrichtung vorgesehen, mit der die Zuführung von Behältnissen unterbrochen werden kann. Unter den Behältnissen werden hierbei sowohl die Kunststoffvorformlinge verstanden als auch die aus diesen Kunststoffvorformlingen hergestellten Kunststoffbehältnisse.

Diese Sperreinrichtung ist dabei bevorzugt in Abhängigkeit eines von der Inspektionseinrichtung ausgegebenen Signals steuerbar. Falls beispielsweise ein dauerhafter Fehler in der Verschlusszuführung erkannt wird, kann in Reaktion auf diesen Fehler die Zuführung von Vorformlingen gesperrt werden. Daneben kann jedoch die Sperreinrichtung auch in Reaktion auf andere Signale aktiviert werden, wie beispielsweise auf Fehlermeldungen der Blaseinrichtung oder der Verschließeinrichtung. Auch kann die Sperreinrichtung bewusst durch den Bediener aktiviert werden.

Umgekehrt kann jedoch die Sperreinrichtung auch ein entsprechendes Signal an eine weitere Sperreinrichtung für die Verschlüsse senden, so dass beispielsweise bei einem Fehler der Zufuhr der Vorformlinge auch die Zufuhr der Verschlüsse gesperrt wird. Vorzugsweise handelt es sich bei dem physikalischen Zustand um einen Fehlerzustand der Verschlüsse. Bei einem derartigen Fehlerzustand kann es sich beispielsweise um ein fehlerhaftes oder vollständig fehlendes Gewinde handeln. Daneben kann es sich bei dem Fehlerzustand auch um eine Verformung der Verschlüsse oder ähnliches handeln. Auch wäre es denkbar, dass es sich bei dem physikalischen Zustand um eine Fehlorientierung der Verschlüsse innerhalb einer Zuführleitung handelt, bevorzugt jedoch handelt es sich bei dem physikalischen Zustand um tatsächliche Fehler bzw. Defekte der Verschlüsse selbst.

Bei einer weiteren vorteilhaften Ausführungsform sind die Verschließeinrichtung und Behandlungseinrichtung miteinander in einem Blocksystem angeordnet. Dies bedeutet, dass die Verschließeinrichtung und die Behandlungseinrichtung miteinander geblockt bzw. permanent synchronisiert sind. Weiterhin sind in diesem Blocksystem vorteilhaft eine Vielzahl von Behandlungseinrichtungen vorgesehen, wie beispielsweise eine Heizeinrichtung für eine Blasmaschine, eine Blasmaschine für die Behältnisse, eine Befüllungseinrichtung und die besagte Verschließeinrichtung.

Bei einer weiteren vorteilhaften Ausführungsform weist die Vorrichtung eine Bevorratungseinheit für die Verschlüsse auf.

Dabei ist diese Bevorratungseinrichtung bzw. das Magazin für die Verschlüsse vorteilhaft hinter bzw. in der Transportrichtung der Verschlüsse nach der Inspektionseinheit angeordnet. Bei einer weiteren vorteilhaften Ausführungsform ist die Inspektionseinrichtung in die besagte Bevorratungseinrichtung integriert. Dies bedeutet, dass der physikalische Zustand der Verschlüsse direkt in einem Magazin der Verschlüsse geprüft wird. Auf diese Weise ist ein sehr bequemes, effizientes Ausleiten von fehlerhaften Verschlüssen und eine sehr effiziente Reaktion auf Fehler der Verschlüsse möglich.

Vorzugsweise ist die Anzahl der in der Zuführeinrichtung aufnehmbaren Verschlüsse an die Anzahl der in dem Blocksystem aufnehmbaren Behältnisse angepasst. Damit ist vorteilhaft die Anzahl der intakten Verschlüsse in der Zuführeinrichtung maximal so groß, dass die in dem oben erwähnten Blocksystem befindlichen Vorformlinge oder Behälter - vorzugsweise ausschließlich des letzten Vorformlings - fertig produziert werden können. Dieser letzte Vorformling weist, wie aus dem Stand der Technik bekannt, eine andere Temperaturverteilung auf als die Vorformlinge, welche jeweils vor- und nachgeschaltete Nachbarn aufweisen. Vorzugsweise wird eine entsprechende Störung über einen Störmelder angezeigt.

Damit ist vorteilhaft die Verschlusszuführung der Verschlüsse immer so ausgeführt, dass eine Störung vor dem Verschlussinspektor auch zu einer Unterbrechung der Vorformling -Zuführung mittels der oben erwähnten Sperreinrichtung führt.

Bei einer weiteren vorteilhaften Ausführungsform ist die Inspektionseinrichtung, bevorzugt auch das erwähnte Magazin, auf im Wesentlichen der gleichen Höhe wie das Blocksystem angeordnet. Vorzugsweise ist hierbei die Inspektionseinrichtung neben dem Blocksystem und, wie gesagt, ebenerdig so angeordnet, dass eine bessere Zugänglichkeit für den Bediener gegeben ist. Auf diese Weise wird eine schnellere Fehlerbehebung erreicht und damit auch der Wirkungsgrad der Anlage verbessert.

Bei einer weiteren vorteilhaften Ausführungsform ist bei der Inspektionseinrichtung eine Ausleitvorrichtung für defekte Verschlüsse vorgesehen. Vorzugsweise werden die Verschlüsse in der Zuführeinrichtung nicht vereinzelt sondern direkt hintereinander geführt. Durch das Ausleiten der defekten Verschlüsse wird dennoch bevorzugt dieser Strom nicht unterbrochen bzw. es entstehen keine Lücken in dem Strom der Verschlüsse.

Bei einer weiteren vorteilhaften Ausführungsform weist die Vorrichtung eine Erwärmungseinrichtung für die Behältnisse auf und die Sperreinrichtung ist vor dieser Erwärmungseinrichtung angeordnet. Damit kann erreicht werden, dass in Fehlerfällen das Rohmaterial der Vorformlinge nicht in die Erwärmungseinrichtung gelangt. Es ist zu berücksichtigen, dass erwärmte Vorformlinge, welche nicht in einem definierten Zeitabschnitt nach der Erwärmung expandiert werden, unbrauchbar werden.

Die vorliegende Erfindung ist weiterhin auf ein Verfahren zum Herstellen von Behältnissen und insbesondere von Getränkebehältnissen gerichtet, wobei die Behältnisse entlang eines vorgegebenen Transportpfads transportiert und mit wenigstens einer Behandlungseinrichtung in einer vorgegebenen Weise behandelt werden, wobei die Behältnisse nach diesem Behandlungsvorgang mittels einer Verschließeinrichtung mit Verschlüssen versehen werden und wobei die Verschlüsse der Verschließeinrichtung mit einer Zuführeinrichtung zugeführt werden.

Erfindungsgemäß werden die Verschlüsse stromaufwärts bezüglich der Zuführeinrichtung von einer Inspektionseinrichtung inspiziert und diese Inspektionseinrichtung gibt wenigstens ein Signal aus, welches für einen Zustand der Verschlüsse charakteristisch ist.

Bei dem Verfahren wird eine Sperreinrichtung, welche eine Zufuhr von Behältnissen sperrt, wenigstens teilweise unter Berücksichtigung des charakteristischen Signals gesteuert.

Weitere Vorteile und Ausführungsformen ergeben sich aus den beigefügten Zeichnungen. Darin zeigt:

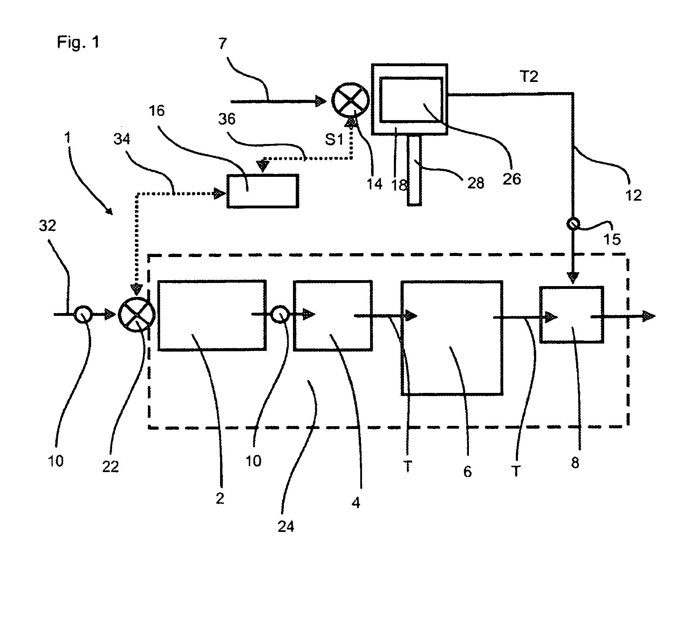

- Fig. 1: eine blockdiagrammartige Darstellung einer erfindungsgemäßen Vorrichtung.

Fig. 1 zeigt ein Blockdiagramm einer erfindungsgemäßen Vorrichtung 1 zum Behandeln von Behältnissen. Dabei werden Behältnisse 10 in Form von Vorformlingen über eine Zuführung 32 in ein Blocksystem 24 eingeführt. In diesem Blocksystem ist eine Erwärmungseinrichtung 2 angeordnet, welche zunächst die Vorformlinge erwärmt. An diese Erwärmungseinrichtung 2 schließt sich eine Umformungseinrichtung 4, wie insbesondere eine Blasmaschine 4, an, welche die erwärmten Kunststoffvorformlinge zu Kunststoffbehältnissen expandiert.

An diese Umformungseinrichtung 4 schließt sich eine Befüllungseinrichtung 6 an, welche die entstandenen Kunststoffbehältnisse mit einer Flüssigkeit, insbesondere einem Getränk, befüllt. Schließlich folgt auf dem Transportpfad T der Behältnisse auf die Befüllungseinrichtung 6 eine Verschließeinrichtung 8, welche die Behältnisse 10 mit Verschlüssen 15 verschließt. Diese Verschlüsse 15 werden dabei über eine Zuführeinrichtung 12 zugeführt. Bei dieser Zuführeinrichtung kann es sich dabei um eine Transportstrecke oder Transportschiene handeln, entlang derer die Verschlüsse zugeführt werden. Dies bedeutet, dass die Zuführeinrichtung 12 bevorzugt auch als Pufferstrecke für die Verschlüsse dient. Auch im Bereich des Blocksystems sind eine oder mehrere Transporteinrichtungen vorgesehen, welche die Vorformlinge bzw. Behältnisse durch das Blocksystem 24 transportieren.

Die Verschlüsse 15 werden dabei über eine Zuführungsleitung 7 einem Magazin 26 zugeführt. Dieses Magazin 26 weist eine Inspektionseinrichtung 18 auf, welche die Verschlüsse auf Fehlerhaftigkeit untersucht. Fehlerhafte Verschlüsse werden über eine Ausleitrichtung 28 ausgeleitet. Das Bezugszeichen 14 bezieht sich auf einen Störmelder, der dafür vorgesehen ist, um Störungen zu melden, welche bereits vor dem Magazin 26 auftreten. Diese Störfälle können - beispielsweise in Form eines Störsignals S1 - über eine elektrische Verbindungsleitung 36 an eine Steuereinrichtung 16 gemeldet und von wiederum über eine elektrische Verbindungsleitung 34 an eine Preformsperre 22 weitergeleitet werden. Diese Verbindungsleitungen 34, 36 erlauben eine bidirektionale Weiterleitung von Signalen, so dass auch Störzustände bei der Behältnisherstellung an die Zuführung für die Verschlüsse 15 gemeldet werden können. Das Bezugszeichen T2 kennzeichnet den Transportpfad, entlang dessen die Verschlüsse 15 transportiert werden.

Diese Preformsperre 22 sperrt daraufhin die Zufuhr von Vorformlingen 10 in das Blocksystem 24 bzw. die Heizeinrichtung 2. Umgekehrt kann diese Steuereinrichtung 16 auch dazu dienen, um bei Auftreten von Fehlern in der Vorformlingszufuhr die Zufuhr von Verschlüssen in das Magazin 26 zu sperren. Dabei kann eine weitere Sperreinrichtung vorgesehen sein, welche die Zufuhr von Vorformlingen sperrt. Damit wird hier eine Zuführung der Verschlüsse 15 zu der Verschließeinrichtung 8 mit Hilfe einer Kombination aus einer Inspektionseinrichtung 18 und einer sich daran anschließenden Zuführungseinrichtung 12 für die bereits inspizierten und für fehlerfrei befundenen Verschlüsse realisiert.

Weiterhin können (in Fig. 1 nicht gezeigt) Sterilisationsvorrichtungen vorgesehen sein, welche die Verschlüsse 15 sterilisieren, wobei derartige Sterilisationsvorrichtungen beispielsweise auch in die Bevorratungseinrichtung 26 integriert sein können. Derartige Sterilisationsvorrichtungen können dabei sowohl Desinfektionsmittel wie Wassersoffperoxid einsetzen als auch eine Sterilisation mittels Strahlung, wie beispielsweise Elektronenstrahlung durchführen.

Auch können Sterilisationseinrichtungen der oben beschriebenen Art für die Vorformlinge bzw. Behältnisse 10 vorgesehen sein. Weiterhin wäre es auch möglich, die Blockung in dem Blocksystem 24 gezielt zeitweise aufzuheben, um auf diese Weise intern Pufferungen von Behältnissen 10 zu ermöglichen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Herstellen von Behältnissen mit einer Transporteinrichtung, welche die Behältnisse (10) entlang eines vorgegebenen Transportpfads transportiert, wenigstens einer Behandlungseinrichtung (4), welche die Behältnisse (10) in einer vorgegebenen weise behandelt, mit einer Verschließeinrichtung (8), welche in einer Transportrichtung der Behältnisse (10) nach der Behandlungseinrichtung (4) angeordnet ist und welche die Behältnisse (10) mit Verschlüssen (15) versieht, und mit einer Zuführeinrichtung (12), welche die Verschlüsse (15) der Verschließeinrichtung (8) zuführt,
**dadurch gekennzeichnet, dass**
in einer Transportrichtung (T2) der Verschlüsse vor der Zuführeinrichtung (12) eine Inspektionseinrichtung (18) vorgesehen ist, welche die Verschlüsse (15) inspiziert und welche wenigstens ein Signal (S1) ausgibt, welches für einen physikalischen Zustand der Verschlüsse (15) charakteristisch ist und in der Transportrichtung der Behältnisse (10) vor der Behandlungseinrichtung (4) eine Sperreinrichtung (22) vorgesehen ist, mit der die zuführung von Behältnissen (10) unterbrochen werden kann.

2. Vorrichtung (1) nach Anspruch 1,
**dadurch gekennzeichnet, dass**
die Behandlungseinrichtung (4) eine Umformungseinheit (4) ist, welche Vorformlinge zu Behältnissen (10) umformt.

3. Vorrichtung (1) nach Anspruch 2,
**dadurch gekennzeichnet, dass**
die sperreinrichtung (22) in Abhängigkeit eines von der Inspektionseinrichtung (18) ausgegebenen Signals steuerbar ist.

4. Vorrichtung (1) nach wenigstens einem der vorangegangenen Ansprüche,
**dadurch gekennzeichnet, dass**
der physikalische Zustand der Verschlüsse (15) ein Fehlerzustand der Verschlüsse (15) ist.

5. Vorrichtung (1) nach wenigstens einem der vorangegangenen Ansprüche,
**dadurch gekennzeichnet, dass**
die verschließeinrichtung (8) und die Behandlungseinrichtung (4) miteinander in einem Blocksystem (24) angeordnet sind.

6. Vorrichtung (1) nach wenigstens einem der vorangegangenen Ansprüche,
**dadurch gekennzeichnet, dass**
die Vorrichtung (1) eine Bevorratungseinrichtung (26) für die Verschlüsse (15) aufweist.

7. Vorrichtung (1) nach Anspruch 6,
**dadurch gekennzeichnet, dass**
die Inspektionseinrichtung (18) in die Bevorratungseinrichtung (26) integriert ist.

8. Vorrichtung (1) nach Anspruch 5,
**dadurch gekennzeichnet, dass**
die Anzahl der in der Zuführeinrichtung (12) aufnehmbaren Verschlüsse (15) an die Anzahl der in dem Blocksystem (24) aufnehmbaren Behältnisse (10) angepasst ist.

9. Vorrichtung (1) nach wenigstens einem der vorangegangenen Ansprüche,
**dadurch gekennzeichnet, dass**
die Inspektionseinrichtung (18) auf im Wesentlichen der gleichen Höhe wie das Blocksystem angeordnet ist.

10. Vorrichtung (1) nach wenigstens einem der vorangegangenen Ansprüche,
**dadurch gekennzeichnet, dass**
an der Inspektionseinrichtung (18) eine Ausleitvorrichtung (28) für defekte Verschlüsse (15) vorgesehen ist.

11. Vorrichtung (1) nach wenigstens einem der vorangegangenen Ansprüche 3 -10.
**dadurch gekennzeichnet, dass**
die Vorrichtung (1) eine Erwärmungseinrichtung (2) für die Behältnisse (10) aufweist und die Sperreinrichtung (22) vor dieser Erwärmungseinrichtung (2) angeordnet ist.

12. Verfahren zum Herstellen von Behältnissen (10), wobei die Behältnisse (10) entlang eines vorgegebenen Transportpfads transportiert und mit wenigstens einer Behandlungseinrichtung in einer vorgegebenen weise behandelt werden, wobei die Behältnisse (10) nach diesem Behandlungsvorgang mittels einer Verschließeinrichtung (8) mit Verschlüssen (15) versehen werden und wobei die Verschlüsse (15) der Verschließeinrichtung (8) mit einer Zuführeinrichtung (12) zugeführt werden,
**dadurch gekennzeichnet, dass**
die Verschlüsse (15) stromaufwärts bezüglich der Zuführeinrichtung (12) von einer Inspektionseinrichtung (18) inspiziert werden und diese Inspektionseinrichtung (18) wenigstens ein Signal (S1) ausgibt, welches für einen physikalischen Zustand der Verschlüsse (15) charakteristisch ist und in der Transportrichtung der Behältnisse (10) vor der Behandlungseinrichtung (4) eine Sperreinrichtung (22) vorgesehen ist, mit der die Zuführung von Behältnissen (10) unterbrochen werden kann.

13. Verfahren nach Anspruch 12,
**dadurch gekennzeichnet, dass**
die Sperreinrichtung (22), welche eine Zufuhr von Behältnissen (10) sperrt, wenigstens zeitweise unter Berücksichtigung des charakteristischen Signals (S1) gesteuert wird.

## Claims

1. An apparatus (1) for producing containers, comprising a transport unit which transports the containers (10) along a specified transport path, at least one handling unit (4) which handles the containers (10) in a specified manner, a closing unit (8) which is located downstream of the handling unit (4) in a transport direction of the containers (10) and which fits closure tops (15) onto the containers (10), and a feeding unit (12) which feeds the closure tops (15) to the closing unit (8),
**characterised in that** an inspection unit (18) is provided upstream of the feeding unit (12) in a transport direction (T2) of the closure tops, which inspection unit (18) inspects the closure tops (15) and emits at least one signal (S1) which is characteristic for a physical condition of the closure tops (15) and **in that** a blocking unit (22) is provided upstream of the handling unit (4) in the transport direction of the containers (10), which blocking unit (22) may be used to interrupt the supply of containers (10).

2. The apparatus (1) as claimed in claim 1, **characterised in that** the handling unit (4) is a reforming unit (4) which transforms preforms into containers (10).

3. The apparatus (1) as claimed in claim 2, **characterised in that** the blocking unit (22) may be controlled as a function of a signal emitted by the inspection unit (18).

4. The apparatus (1) as claimed in at least one of the preceding claims, **characterised in that** the physical condition of the closure tops (15) is a faulty condition of the closure tops (15).

5. The apparatus (1) as claimed in at least one of the preceding claims, **characterised in that** the closing unit (8) and the handling unit (4) are disposed together in a block system (24).

6. The apparatus (1) as claimed in at least one of the preceding claims, **characterised in that** the apparatus (1) includes a stocking unit (26) for the closure tops (15).

7. The apparatus (1) as claimed in claim 6, **characterised in that** the inspection unit (18) is integrated in the stocking unit (26).

8. The apparatus (1) as claimed in claim 5, **characterised in that** the number of closure tops (15) that can be accommodated in the feeding unit (12) is adapted to the number of containers (10) that can be accommodated in the block system (24).

9. The apparatus (1) as claimed in at least one of the preceding claims, **characterised in that** the inspection unit (18) is disposed at essentially the same level as the block system.

10. The apparatus (1) as claimed in at least one of the preceding claims, **characterised in that** a removal device (28) for defective closure tops (15) is provided on the inspection unit (18).

11. The apparatus (1) as claimed in at least one of the preceding claims 3 - 10, **characterised in that** the apparatus (1) includes a heating unit (2) for the containers (10) and the blocking unit (22) is disposed upstream of this heating unit (2).

12. A method of producing containers (10), wherein the containers (10) are transported along a specified transport path and are handled by at least one handling unit in a specified manner, wherein after this handling operation, closure tops (15) are fitted onto the containers (10) by a closing unit (8), and wherein the closure tops (15) are fed to the closing unit (8) by a feeding unit (12), **characterised in that** the closure tops (15) are inspected by an inspection unit (18) upstream of the feeding unit (12) and this inspection unit (18) emits at least one signal (S1) which is characteristic of a physical condition of the closure tops (15) and **in that** a blocking unit (22) is provided upstream of the handling unit (4) in the transport direction of the containers (10), which blocking unit (22) may be used to interrupt the supply of containers (10).

13. The method as claimed in Claim 12, **characterised in that** the blocking unit (22) which blocks the supply of containers (10) is at least temporarily controlled in consideration of the characteristic signal (S1).

## Revendications

1. Dispositif (1) destiné à fabriquer des récipients avec un système de transport, lequel transporte les récipients (10) le long d'un chemin de transport prédéfini, au moins un système de traitement (4), qui traite les récipients (10) d'une façon prédéfinie, un système de fermeture (8), qui est disposé dans un sens de transport des récipients (10) en aval du système de traitement (4) et qui dote les récipients (10) de fermetures (15), et un système d'amenée (12), qui amène les fermetures (15) au système de fermeture (8),
**caractérisé en ce que**
un système d'inspection (18) est prévu dans le sens de transport (T2) des fermetures en amont du système d'amenée (12), lequel système inspecte les fermetures (15) et qui émet au moins un signal (S1), lequel est caractéristique d'un état physique des fermetures (15), et un système de blocage (22) est prévu dans le sens de transport des récipients (10) en amont du système de traitement (4), système de blocage avec lequel l'amenée de récipients (10) peut être interrompue.

2. Dispositif (1) selon la revendication 1,
**caractérisé en ce que**
le système de traitement (4) est une unité de transformation (4) qui transforme des préformes en récipients (10).

3. Dispositif (1) selon la revendication 2,
**caractérisé en ce que**
le système de blocage (22) peut être commandé en fonction d'un signal émis par le système d'inspection (18).

4. Dispositif (1) selon au moins l'une des revendications précédentes,
**caractérisé en ce que**
l'état physique des fermetures (15) est un état d'erreur des fermetures (15).

5. Dispositif (1) selon au moins l'une des revendications précédentes,
**caractérisé en ce que**
le système de fermeture (8) et le système de traitement (4) sont disposés l'un avec l'autre dans un système en bloc (24).

6. Dispositif (1) selon au moins l'une des revendications précédentes,
**caractérisé en ce que**
le dispositif (1) présente un système d'alimentation (26) pour les fermetures (15).

7. Dispositif (1) selon la revendication 6,
**caractérisé en ce que**
le système d'inspection (18) est intégré dans le système d'alimentation (26).

8. Dispositif (1) selon la revendication 5,
**caractérisé en ce que**
le nombre des fermetures (15) pouvant être réceptionnées dans le système d'amenée (12) est adapté au nombre des récipients (10) pouvant être reçus dans le système en bloc (24).

9. Dispositif (1) selon au moins l'une des revendications précédentes,
**caractérisé en ce que**
le système d'inspection (18) est disposé sensiblement à la même hauteur que le système en bloc.

10. Dispositif (1) selon au moins l'une des revendications précédentes,
**caractérisé**
**en ce qu'**un dispositif de déviation (28) est prévu pour des fermetures (15) défectueuses sur le système d'inspection (18).

11. Dispositif (1) selon au moins l'une des revendications précédentes 3 à 10,
**caractérisé en ce que**
le dispositif (1) présente un système de réchauffement (2) pour les récipients (10) et le système de blocage (22) est disposé en amont de ce système de réchauffement (2).

12. Procédé pour fabriquer des récipients (10), les récipients (10) étant transportés le long d'un chemin de transport prédéfini et étant traités avec au moins un système de traitement d'une façon prédéfinie, les récipients (10) étant dotés de fermetures (15) après cette opération de traitement au moyen d'un système de fermeture (8) et les fermetures (15) étant amenées au système de fermeture (8) avec un système d'amenée (12),
**caractérisé en ce que**
les fermetures (15) sont inspectées par un système d'inspection (18) en amont par rapport au système d'amenée (12), et ce système d'inspection (18) émet au moins un signal (S1) qui est caractéristique d'un état physique des fermetures (15), et un système de blocage (22) avec lequel l'arrivée des récipients (10) peut être interrompue est prévu dans le sens de transport des récipients (10) en amont du système de traitement (4).

13. Procédé selon la revendication 12,
**caractérisé en ce que**
le système de blocage (22), qui bloque une arrivée de récipients (10), est commandé au moins temporairement en tenant compte du signal (S1) caractéristique.
